# EUROPÄISCHE PATENTSCHRIFT

(11) **EP 2 471 703 B1**
(45) Veröffentlichungstag und Bekanntmachung des Hinweises auf die Patenterteilung: **07.01.2015**
(21) Anmeldenummer: 11010239.9
(22) Anmeldetag: 27.12.2011
(51) Int. Cl.: B62K 21/06, B62K 21/18

(54) **Steuersatzkomponenten für einen Fahrradrahmen und Fahrradkomplettrahmen**
Headset components for a bicycle frame and complete bicycle frame
Composants de bloc d'amorçage pour un cadre de vélo et cadre complet de vélo

(30) Priorität: 30.12.2010 DE 102010056482
(43) Veröffentlichungstag der Anmeldung: 04.07.2012
(73) Patentinhaber: Gobax GmbH, 72116 Mössingen (DE)
(72) Erfinder: Dorn, Robert, 72820 Sonnenbühl-Wilmandingen (DE)
(74) Vertreter: Otten, Herbert

(56) Entgegenhaltungen:
- EP-A1- 2 371 696
- CN-Y- 2 606 049
- CN-Y- 2 608 404
- CN-Y- 2 839 096
- DE-A1- 19 962 468
- DE-U1-202004 013 166
- DE-U1-202008 004 845
- DE-U1-202009 017 382
- GB-A- 2 368 826
- TW-U- M 399 829

## Beschreibung

Die Erfindung betrifft steuersatzkomponenten für einen Fahrradrahmen und einen Fahrradkomplettrahmen gemäß dem Oberbegriff des Anspruchs 1 bzw. 10.

Aus der DE 20 2004 013 166 U1, auf die der Oberbegriff von Anspruch 1 basiert, ist ein Steuersatz für Fahrräder mit einem integrierten Lenkanschlag bekannt. Dieser Steuersatz umfasst mit dem Rahmen verbundene Anschläge zwischen welchen ein mit der Gabel verbundener Anschlag freiliegend läuft. Bei einem derartigen Lenkwinkelbegrenzer besteht dadurch ein erhebliches Verletzungsrisiko, dass die Finger des Fahrers insbesondere beim Schieben oder beim Abstellen des Fahrrads zwischen dem mit der Gabel verbundnen Anschlag und einem der mit dem Rahmen verbundenen Anschläge eingeklemmt werden.

Weiterhin ist aus http://www.mountainbikemagazin.de/news/bikes-parts/schutz-vor-rahmenschaeden-neuelenkbegrenzung-von-acros.306821.2.htm die Lenkbegrenzung Block-Lock der Firma Acros bekannt, welche unter der Bezeichnung AH-06 BL - 52.02.000S vertrieben wird. Diese Lenkbegrenzung bzw. dieser Steuersatz umfasst eine obere Lagerschale und eine Klemmeinrichtung, wobei die obere Lagerschale in jeder Lenkstellung fixiert zu einer Lenkachse steht, wobei die Klemmeinrichtung abhängig von einer Lenkstellung gegenüber der oberen Lagerschale um die Lenkachse verdreht wird, wobei die Klemmeinrichtung einen Steuersatzdeckel drehfest am Gabelschaftrohr der Gabel fixiert und wobei der Steuersatzdeckel mit einem Fortsatz nach unten in eine an der oberen Lagerschale ausgebildete Nut greift. Hierbei bildet die Nut in der oberen Lagerschale ein potentielles Auffangbecken für Regen- und/oder Kondenswasser und muss aufwendig abgedichtet werden. Bei einem Versagen oder einer Falschmontage der Abdichtung besteht bei Temperaturen unter dem Gefrierpunkt durch Eisbildung die Gefahr einer Einschränkung des verfügbaren Lenkwinkels oder die Gefahr einer Schwergängigkeit der Lenkung und somit eine erhöhte Unfallgefahr.

Aus der älteren EP 2 371 696 A1 ist eine Lenkanordnung für Zweiräder bekannt, bei welcher zwei Anschläge unter Zwischenschaltung eines elastischen Körpers zusammen wirken.

Aus der DE 20 2008 004 845 sind Steuersatzkomponenten eines Steuersatzes für einen Fahrradrahmen bekannt, welche eine obere Lagerschale und eine Klemmeinrichtung umfassen, wobei die obere Lagerschale bei jedem Lenkwinkel fixiert zu einer Lenkachse steht und wobei die Klemmeinrichtung abhängig vom jeweiligen Lenkwinkel gegenüber der oberen Lagerschale um die Lenkachse verdreht wird.

Der Erfindung liegt die Aufgabe zugrunde, Steuersatzkomponenten für einen Fahrradrahmen bzw. einen Fahrradkomplettrahmen vorzuschlagen, bei welchen verfügbare Bauteile verbaubar sind und bei welchen bei einer Nachrüstung vorhandene Bauteile weiterverwendbar sind.

Diese Aufgabe wird ausgehend von den Merkmalen des Oberbegriffs des Anspruchs 1 bzw. 10 durch die kennzeichnenden Merkmale des Anspruchs 1 bzw. 10 gelöst. In den Unteransprüchen sind vorteilhafte und zweckmäßige Weiterbildungen angegeben.

Die erfindungsgemäßen Steuersatzkomponenten für einen Fahrradrahmen, welche insbesondere als Fahrradrahmensteuersatzkomponenten zur Begrenzung eines Lenkwinkels ausgeführt sind, umfassen eine obere Lagerschale und eine Klemmeinrichtung, wobei die obere Lagerschale unabhängig von dem gewählten möglichen Lenkwinkel fixiert zu einer Lenkachse steht, wobei die Klemmeinrichtung in Abhängigkeit von dem jeweils gewählten möglichen Lenkwinkel gegenüber der oberen Lagerschale um die Lenkachse verdreht wird und wobei die obere Lagerschale mit mindestens einem Nocken direkt in eine Nut der Klemmeinrichtung greift, wobei vorgesehen ist, die obere Lagerschale mit dem wenigstens einen Nocken an einem Steuersatzdeckel vorbei in die wenigstens eine Nut greifen zu lassen und wobei der Steuersatzdeckel, welcher eine weitere Komponente der erfindungsgemäßen Steuersatzkomponenten bildet, bei gebrauchsfertig montiertem Steuersatz formschlussfrei zwischen der oberen Lagerschale und der Klemmeinrichtung liegt. Hierdurch ist es möglich, insbesondere bei einer Nachrüstung eines herkömmlichen Steuersatzes ohne Lenkanschlagbegrenzung mit den erfindungsgemäßen Steuersatzkomponenten, den vorhandenen Steuersatzdeckel zu verwenden, da dieser keine zusätzlich Funktion übernehmen muss, sondern weiterhin seine Abdeckfunktion für die obere Lagerschale und das darin angeordnete Lager beibehält. Durch ein Eingreifen der oberen Lagerschale in die Klemmeinrichtung wird eine Positionierung der Steuersatzkomponenten am Fahrrad erreicht, bei welcher keine Gefahr einer Wasseransammlung besteht, durch welche die Funktionsfähigkeit der Lenkung beeinträchtigt werden könnte, da die obere Lagerschale zur Realisierung der Lenkwinkelbegrenzung keine Vertiefung aufweist, in welcher sich Wasser ansammeln kann. Kern der Erfindung ist somit ein einklemmsicheres und geschlossenes System mit einer an den Umweltbedingungen orientierten Positionierung bzw. Gestaltung spezieller Steuersatzkomponenten. Durch die nach unten zu der oberen Lagerschale geöffnete Nut wird eine Wasseransammlung zuverlässig verhindert und ist eine Abdichtung der Nut nicht erforderlich. Weiterhin sind durch ein direktes Zusammenwirken der oberen Lagerschale und der Klemmeinrichtung zur Realisierung einer Lenkwinkelbegrenzung nur zwei von einem herkömmlichen Steuersatz abweichende Bauteilkomponenten erforderlich. Somit kann eine Umrüstung schell und kostengünstig durchgeführt werden, da nur zwei Bauteilkomponenten zu ersetzen sind und nur wenige Montageschritte erforderlich sind. Entsprechend kann auch ein kompletter Steuersatz kostengünstig in ein Verkaufsprogramm aufgenommen werden, da hierzu nur zwei Neuteile erforderlich sind.

Erfindungsgemäß ist es vorgesehen, die Nut nach unten zu der oberen Lagerschale zu öffnen

Erfindungsgemäß ist es alternativ zur Verwendung eines Steuersatzdeckels ohne Zusatzfunktion auch vorgesehen, die Klemmeinrichtung an ihrer Unterseite zu der oberen Lagerschale hin wie einen Steuersatzdeckel auszubilden, wobei die obere Lagerschale bei gebrauchsfertig montiertem Steuersatz von der Klemmeinrichtung dann wie durch einen Steuersatzdeckel abdeckt wird. Durch eine derartige Ausführung der Klemmeinrichtung wird die Zahl der Einzelbauteile im Vergleich mit einem Steuersatz ohne Lenkwinkelbegrenzung trotz der zusätzlich integrierten Funktion der Lenkwinkelbegrenzung nicht erhöht.

Weiterhin sieht die Erfindung vor, die Klemmeinrichtung mit einer Klemmschelle auszustatten, wobei diese eine Abdeckung für die obere Lagerschale bildet, wobei der Nocken der oberen Lagerschale von oben in Richtung der Lenkachse betrachtet durch die Klemmeinrichtung verdeckt ist und wobei der Nocken radial zu der Lenkachse betrachtet durch die Klemmeinrichtung verdeckt ist. Hierdurch erfährt der die obere Lagerschale und der an der oberen Lagerschale ausgebildete Anschlag eine zu allen Seiten und nach oben gerichtet Kapselung, welche wie ein Schutzschirm über der oberen Lagerschale und deren Anschlag liegt und insbesondere Regen und Schnee von der oberen Lagerschale bzw. deren Anschlag abhält.

Die Erfindung sieht auch vor, den Anschlag als nach oben gerichtete stiftförmige Nase auszubilden, wobei der Nocken mit seiner Längsachse parallel zu der Lenkachse ausgerichtet ist. Durch diese Ausrichtung ist eine platzsparende Ausführung der Steuersatzkomponenten möglich, da der Anschlag in geringer Entfernung zu der Lenkachse ausgebildet werden kann.

Erfindungsgemäß ist die Nut der Klemmeinrichtung als kreisringabschnittförmig gebogene und zu beiden Enden geschlossene Nut ausgebildet, welche konzentrisch zu der Lenkachse als Kreisringabschnitt verläuft und welche nach unten zu der oberen Lagerschale hin derart geöffnet ist, dass der Nocken der oberen Lagerschale in die Nut der Klemmeinrichtung eingreift, wenn die obere Lagerschale und die Klemmeinrichtung montiert sind. Hierdurch wird ein optimales Zusammenwirken der beiden Komponenten erreicht, welches völlig unabhängig von dem maximal zulässigen Lenkwinkel ist, da der Kreisringabschnitt mit beliebiger Winkelabdeckung ausgeführt werden kann.

Die Erfindung sieht auch vor, den wenigstens einen Nocken der oberen Lagerschale durch Einlage eines Dämpfungsmittels, welches insbesondere durch wenigstens einen elastischen Körper gebildet ist, in einer linken Lenkendstellung oder in einer rechten Lenkendstellung gedämpft gegen eine Seitenwand der Nut der Klemmeinrichtung anschlagen zu lassen, wobei das Dämpfungsmittel insbesondere an dem Nocken befestigt ist und/oder wobei das Dämpfungsmittel insbesondere in der wenigstens einen Nut der Klemmeinrichtung angeordnet ist und durch zwei elastische Körper gebildet ist, wobei die Körper in der Nut im Bereich von deren geschlossenen Enden positioniert sind. Hierdurch wird eine schlagartige Belastung der mit dem Fahrradrahmen verpressten oberen Lagerschale bei Volleinschlag vermieden und somit eine Überbeanspruch durch wiederholtes Anschlagen vermieden. Bei einer Anordnung des Dämpfungsmittels an dem Nocken reicht ein Dämpfungsmittel aus. Bei einer Positionierung des Dämpfungsmittels in der Nut der Klemmeinrichtung wird eine Relativbewegung zwischen Dämpfungsmittel und Klemmeinrichtung vollständig vermieden, so dass das Dämpfungsmittel tatsächlich nur bei Volleinschlag beansprucht wird und hierdurch eine erhöhte Lebensdauer aufweist.

Erfindungsgemäß ist es auch vorgesehen, die Klemmschelle der Klemmeinrichtung als geschlitzte Hülse bzw. Spange auszubilden, deren Durchmesser, welchen deren Öffnung aufweist, durch Anziehen wenigstens eines Klemmmittels reduziert wird, wobei das Klemmmittel insbesondere als Schraube ausgebildet ist und insbesondere in eine an der Klemmschelle ausgebildete Gewindebohrung greift. Durch diese Bauart ist ein drehfester und schiebefester Halt der Klemmeinrichtung gewährleistet und wird ein ungewünschtes Verstellen der Lenkwinkelbegrenzung wirksam verhindert.

Die Erfindung sieht auch vor, zwischen der oberen Lagerschale und der Klemmeinrichtung ein Lager, insbesondere ein Kugellager, einen Zentrierring, welcher das Lager auf die Lenkachse ausrichtet und ein Steuersatzdeckel, mit welchem das Lager und der Zentrierring abgedeckt werden, anzuordnen, wobei der Steuersatzdeckel insbesondere gegenüber der Klemmeinrichtung und insbesondere gegenüber der oberen Lagerschale frei verdrehbar ist und wobei der Nocken zu der Lenkachse insbesondere einen radialen Abstand aufweist, welcher größer ist als ein Radius des Steuersatzdeckels. Durch eine derartige Bauart ist insbesondere gewährleistet, dass das Lager, der Zentrierring und der Steuersatzdeckel ohne spezielle Anpassung an die beiden erfindungsgemäßen Komponenten verbaut werden können.

Der erfindungsgemäße Fahrradkomplettrahmen umfasst einen Fahrradrahmen, eine Gabel und einen Steuersatz mit Steuersatzkomponenten nach wenigstens einem der Ansprüche 1 bis 9, wobei die Gabel ein Gabelschaftrohr umfasst und wobei die Gabel mit ihrem Gabelschaftrohr unter Verwendung des Steuersatzes in einem Steuerrohr des Fahrradrahmens drehbar um eine Lenkachse gelagert ist, wobei der Steuersatz neben weiteren Bauteilen eine obere Lagerschale und eine Klemmeinrichtung umfasst, wobei die obere Lagerschale in ein lenkerseitiges Ende des Steuerrohrs eingepresst ist und wobei die Klemmeinrichtung drehfest mit dem Gabelschaftrohr verbunden ist und unter Zwischenlage eines Lagers, eines Zentrierrings und eines Steuersatzdeckels der oberen Lagerschale gegenüber liegt, wobei die obere Lagerschale bei jedem Lenkwinkel der Gabel fixiert zu der Lenkachse steht, wobei die Klemmeinrichtung abhängig vom jeweiligen Lenkwinkel der Gabel gegenüber der oberen Lagerschale um die Lenkachse verdreht wird und wobei die obere Lagerschale mit einem Nocken direkt in die Klemmeinrichtung greift, wobei vorgesehen ist, die obere Lagerschale mit dem wenigstens einen Nocken an einem Steuersatzdeckel vorbei in die wenigstens eine Nut greifen zu lassen und wobei der Steuersatzdeckel, welcher eine weitere Komponente der erfindungsgemäßen Steuersatzkomponenten bildet, bei gebrauchsfertig montiertem Steuersatz formschlussfrei zwischen der oberen Lagerschale und der Klemmeinrichtung liegt. Hierdurch ist es möglich, insbesondere bei einer Nachrüstung eines herkömmlichen Steuersatzes ohne Lenkanschlagbegrenzung mit den erfindungsgemäßen Steuersatzkomponenten, den vorhandenen Steuersatzdeckel zu verwenden, da dieser keine zusätzlich Funktion übernehmen muss, sondern weiterhin seine Abdeckfunktion für die obere Lagerschale und das darin angeordnete Lager beibehält. Durch ein Eingreifen der oberen Lagerschale in die Klemmeinrichtung wird eine Positionierung der Steuersatzkomponenten am Fahrrad erreicht, bei welcher keine Gefahr einer Wasseransammlung besteht, durch welche die Funktionsfähigkeit der Lenkung beeinträchtigt werden könnte, da die obere Lagerschale zur Realisierung der Lenkwinkelbegrenzung keine Vertiefung aufweist, in welcher sich Wasser ansammeln kann. Kern der Erfindung ist somit ein Fahrradkomplettrahmen mit einer an den Umweltbedingungen orientierten Positionierung spezieller Steuersatzkomponenten, durch welche eine Funktionsstörung verhindert wird. Weiterhin sind durch ein direktes Zusammenwirken der oberen Lagerschale und der Klemmeinrichtung zur Realisierung einer Lenkwinkelbegrenzung nur zwei von einem herkömmlichen Steuersatz abweichende Bauteilkomponenten erforderlich. Somit kann eine Umrüstung schell und kostengünstig durchgeführt werden, da nur zwei Bauteilkomponenten zu ersetzen sind und nur wenige Montageschritte erforderlich sind. Entsprechend kann auch ein kompletter Steuersatz kostengünstig in ein Verkaufsprogramm aufgenommen werden, da hierzu nur zwei Neuteile erforderlich sind.

Weitere Einzelheiten der Erfindung werden in der Zeichnung anhand von schematisch dargestellten Ausführungsbeispielen beschrieben.

Hierbei zeigt:
- Figur 1:: eine schematische Ansicht eines Fahrradkomplettrahmens, welcher einen Fahrradrahmen, eine Gabel und einen Steuersatz mit erfindungsgemäßen Steuersatzkomponenten umfasst;
- Figur 2:: eine perspektivische Ansicht einer oberen Lagerschale;
- Figur 3:: eine Ansicht der in der Figur 2 gezeigten oberen Lagerschale aus einer Pfeilrichtung III;
- Figur 4:: einen Schnitt durch die in der Figur 3 gezeigte obere Lagerschale entlang der Schnittlinie IV-IV;
- Figur 5:: eine teilweise aufgeschnittene Ansicht einer erfindungsgemäßen Klemmeinrichtung von unten;
- Figur 6:: eine teilweise geschnittene Seitenansicht der in der Figur 5 gezeigten Klemmeinrichtung aus einer Pfeilrichtung VI;
- Figur 7:: eine Ansicht der in den Figuren 5 und 6 gezeigten Klemmeinrichtung von oben und
- Figur 8:: eine perspektivische Ansicht des Zusammenwirkens der in den Figuren 1, 2 bis 4 gezeigten oberen Lagerschale und der in den Figuren 1, 5 bis 7 gezeigten Klemmeinrichtung.

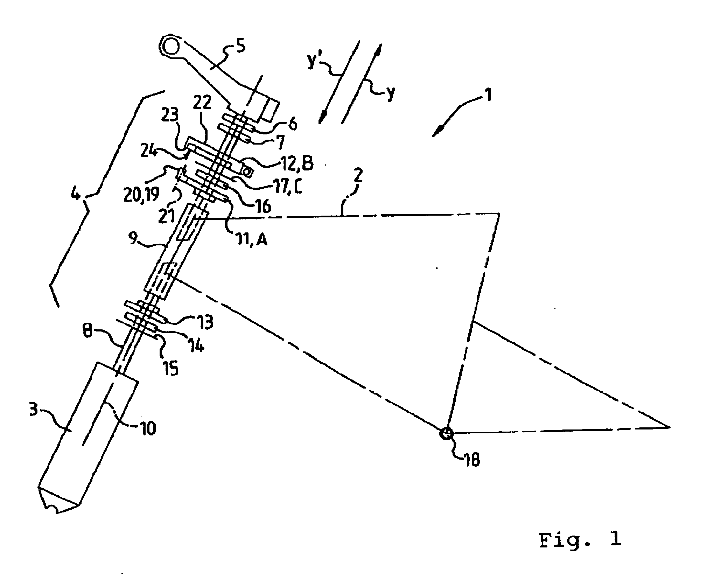

In der Figur 1 ist in schematischer Ansicht ein Fahrradkomplettrahmen 1 gezeigt. Der Fahrradkomplettrahmen 1 umfasst einen Fahrradrahmen 2, eine Gabel 3 und einen Steuersatz 4. Zusätzlich sind ein Lenkervorbau 5 und zwei Distanzringe 6, 7 gezeigt. Die Gabel 3 umfasst ein Gabelschaftrohr 8, welches durch ein Steuerrohr 9 des Fahrradrahmens 2 geführt und an diesem drehbar um eine Lenkachse 10 mittels des Steuersatzes 4 befestigt ist. Die oben erwähnten Bauteile sind nach Art einer Explosionsdarstellung gezeigt. Entsprechend ist auch das einteilige Gabelschaftrohr 8 geteilt und überlängt dargestellt. Neben einer speziell ausgebildeten oberen Lagerschale 11, welche auch als Steuersatzkomponente bzw. Fahrradrahmensteuersatzkomponente A bezeichnet wird, und einer speziell ausgebildeten Klemmeinrichtung 12, welche auch als Steuersatzkomponente B bzw. Fahrradrahmensteuersatzkomponente bezeichnet wird, umfasst der Steuersatz 4 unterhalb des Steuerrohrs 9 eine untere Lagerschale 13, ein unteres Lager 14 und einen sogenannten Steuersatzboden 15. Oberhalb des Steuerrohrs 9 umfasst der Steuersatz 4 zwischen der oberen Lagerschale 11 und der Klemmeinrichtung 12 noch ein oberes Lager 16, einen nicht dargestellten Zentrierring, welcher das Lager 16 auf die Lenkachse 10 ausrichtet und einen Steuersatzdeckel 17. Der Steuersatzdeckel 17 wird auch als Steuersatzkomponente bzw. Fahrradrahmensteuersatzkomponente C bezeichnet. Der vollständige Steuersatz 4 umfasst insbesondere noch weitere Kleinteile wie insbesondere Dichtungen, eine Spannkralle, einen Spanndeckel und eine Zylinderschraube, mit welcher der Spanndeckel gegen die in das Gabelschaftrohr 8 geklemmte Spannkralle gezogen wird, um das Lagerspiel einzustellen. Zur Montage der Gabel 3 wird die obere Lagerschale 11 in eine Pfeilrichtung y' und die untere Lagerschale 13 in eine entgegen gesetzte Pfeilrichtung y in das Steuerrohr 9 eingepresst und hierdurch drehfest mit dem Fahrradrahmen 2 verbunden. Entsprechend der Figur 1 erfolgt der Zusammenbau derart, dass das untere Lager 14 und der Steuersatzboden 15 in die untere Lagerschale 13 eingelegt und die Gabel 3 mit ihrem Gabelschaftrohr 3 in die Pfeilrichtung y durch das Steuerrohr 9 des Fahrradrahmens 2 geschoben wird.

Anschließend werden das obere Lager 16 und der Steuersatzdeckel 17 in die bereits montierte obere Lagerschale 11 eingelegt und mit der Klemmeinrichtung 12 abgedeckt. Auf die Klemmeinrichtung 12 werden die Distanzringe 6, 7 und anschließend der Lenkervorbau 5 aufgesetzt. Nach dem Einstellen des Lagerspiels des Steuersatzes 4 durch die oben erwähnten, nicht dargestellten Komponenten werden der Lenkervorbau 5 und die Klemmeinrichtung 12 drehfest und verschiebesicher in axialer Richtung mit dem Gabelschaftrohr verspannt. Vor dem Verspannen wird die Klemmeinrichtung 12 derart auf die obere Lagerschale 11 ausgerichtet, dass nach rechts und links um die Lenkachse 10 der gleiche maximale Lenkwinkel möglich ist. Bei vollständig montiertem Steuersatz 4 liegt dann der Steuersatzdeckel 17 formschlussfrei zwischen der oberen Lagerschale 11 und der Klemmeinrichtung 12. Die Lenkwinkelbegrenzung wird allein durch das Zusammenwirken der oberen Lagerschale 11 und der Klemmeinrichtung 12 realisiert.

Der Steuersatzdeckel 17 ist im Hinblick auf die Lenkwinkelbegrenzung funktionsfrei. Durch die Realisierung der Lenkwinkelbegrenzung mit nur zwei Steuersatzkomponenten 11, 12 kann diese mit geringeren Toleranzen als eine Lenkwinkelbegrenzung mit mehr als zwei Steuersatzkomponenten gefertigt werden, da kein Spiel, welches ein weitere Bauteil zwangsläufig mit sich bringt, berücksichtigt werden muss. An dem skizzierten Fahrradrahmen 2 ist zur besseren Verständlichkeit noch ein Tretlager 18 schematisch eingezeichnet. Die obere Lagerschale 11 umfasst einen Nocken 19, welcher die Funktion eines Anschlags übernimmt, als stiftförmige Nase 20 ausgebildet ist und mit seiner Längsachse 21 parallel zu der Lenkachse 10 in Richtung der Klemmeinrichtung 12 ausgerichtet ist. Die Klemmeinrichtung umfasst eine Klemmschelle 22 und weist eine zu einer Unterseite 23 geöffnete Nut 24 auf, in welcher der als Nase 20 ausgebildete Nocken 19 eingreift, wenn der Steuersatz vollständig montiert und das Lagerspiel eingestellt ist.

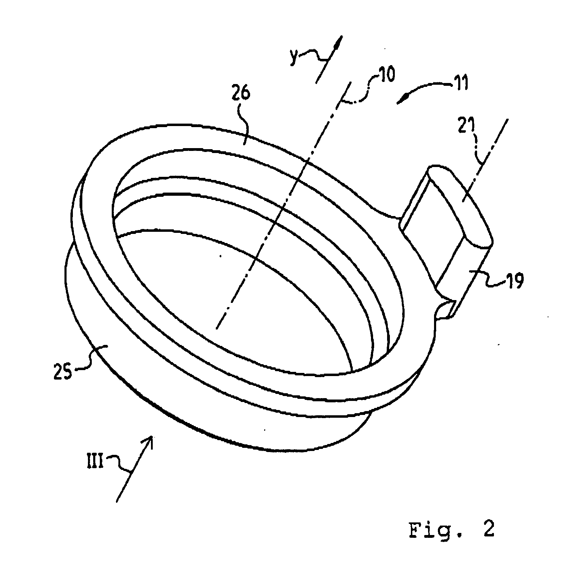

In der Figur 2 ist eine perspektivische Ansicht der oberen Lagerschale 11, welche bereits schematisch in der Figur 1 gezeigt ist, dargestellt. Die oberen Lagerschale 11 umfasst einen kreisringförmigen Ansatz 25, mit welchem diese in das Steuerrohr eingepresst wird. Weiterhin umfasst die obere Lagerschale 11 einen Auflagering 26, in welchen das in der Figur 1 gezeigte obere Lager 16 eingelegt wird, und den erwähnten Nocken 19, welcher an dem Auflagering 26 angeformt ist. Die Längsachse 21 des Nockens 19 verläuft, wie erwähnt, parallel zu der Lenkachse 10.

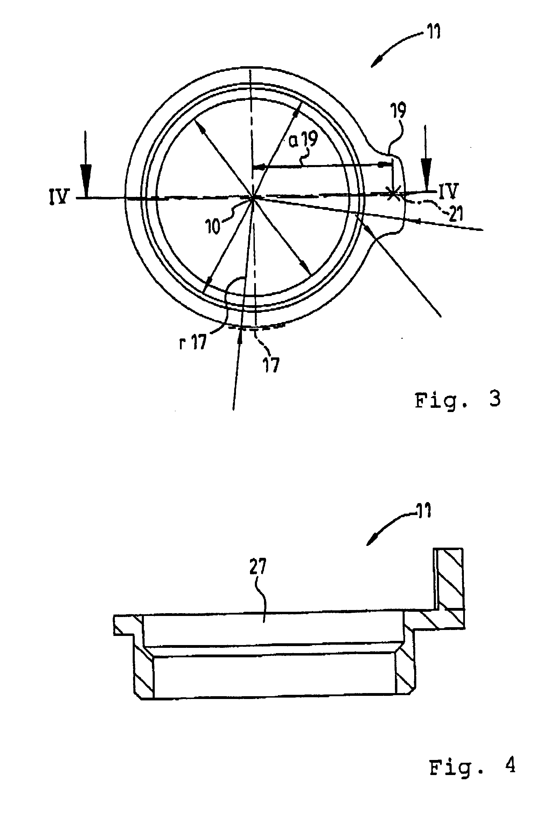

In der Figur 3 ist eine Ansicht auf die in der Figur 2 gezeigte obere Lagerschale aus einer in der Figur 2 angedeuteten Pfeilrichtung III gezeigt. Aus dieser Unteransicht ist erkennbar, dass der Nocken 19 mit seiner Längsachse 21 zu der Lenkachse 10 in radialer Richtung einen Abstand a19 aufweist, welcher größer ist als ein Radius r17 des mit gestrichelten Linien angedeuteten Steuersatzdeckels 17, welcher das von der oberen Lagerschale 11 aufgenommene Lager schützt und abdeckt.

In der in der Figur 4 gezeigten Schnittansicht entsprechend der in der Figur 3 angedeuteten Schnittlinie IV-IV ist bei der oberen Lagerschale 11 ein Aufnahmebereich 27 für das obere Lager erkennbar.

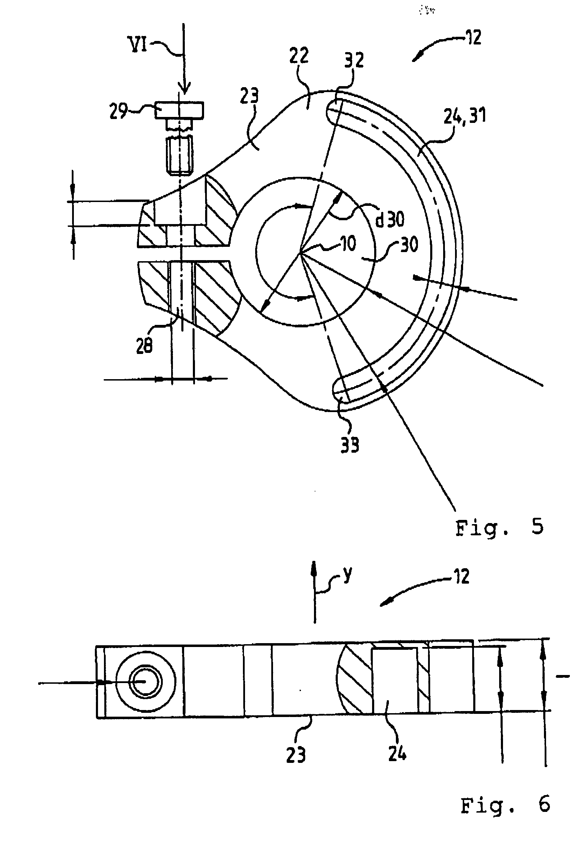

In der Figur 5 ist eine Unteransicht der Klemmeinrichtung 12 dargestellt, welche bereits schematisch in der Figur 1 gezeigt ist. Die Klemmeinrichtung 12 umfasst eine Klemmschelle 22 mit einer Gewindebohrung 28, in welche eine Schraube 29 einschraubbar ist, um einen Durchmesser d30 einer Durchgangsbohrung 30, welche auf das Gabelschaftrohr abgestimmt ist, zu verändern. An der Unterseite 23 weist die Klemmeinrichtung 12 die Nut 24 auf, welche sich zu der Unterseite 23 öffnet und kreisringabschnittförmig ausgebildet ist. In einem durch die Nut 24 gebildeten Kreisringsegment 31 wird der Nocken der oberen Lagerschale im zusammengebauten Zustand geführt. Die Klemmeinrichtung 12 überdeckt den Nocken der oberen Lagerschale von oben und von der Seite, wobei sich die mit dem Gabelschaftrohr drehfest verbundene Klemmeinrichtung 12 bei einer Veränderung des Lenkwinkels über dem exzentrisch zu der Lenkachse 10 angeordneten Nocken hinwegdreht bis sie mit einem Ende 32 oder 33 ihrer Nut 24 an dem Nocken anliegt.

In der Figur 6 ist eine Ansicht der in der Figur 5 gezeigten Klemmeinrichtung 12 aus einer in der Figur 5 angedeuteten Blickrichtung VI dargestellt. Im aufgeschnitten dargestellten Bereich der Seitenansicht ist die Nut 24 im Querschnitt erkennbar. Durch die Pfeilrichtung y ist die Orientierung der Klemmeinrichtung 12 mit Bezug auf die Figur 1 klargestellt. Die Klemmeinrichtung 12 ist etwa in Einbaulage gezeigt, in welcher sich die Nut 24 zu der Unterseite 23 öffnet.

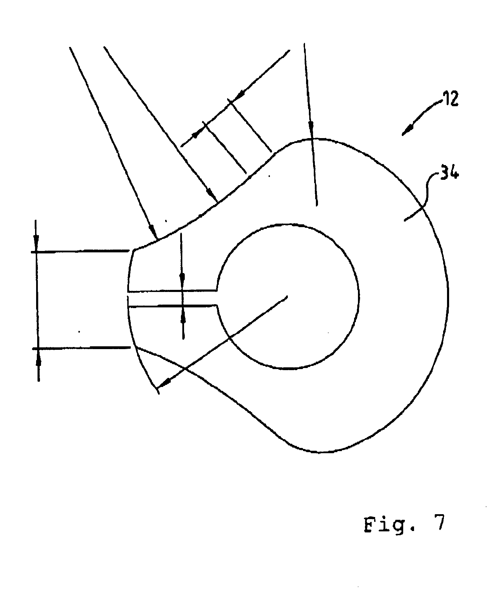

In der Figur 7 ist die in den Figuren 5 und 6 gezeigte Klemmeinrichtung 12 in Draufsicht auf eine Oberseite 34 gezeigt.

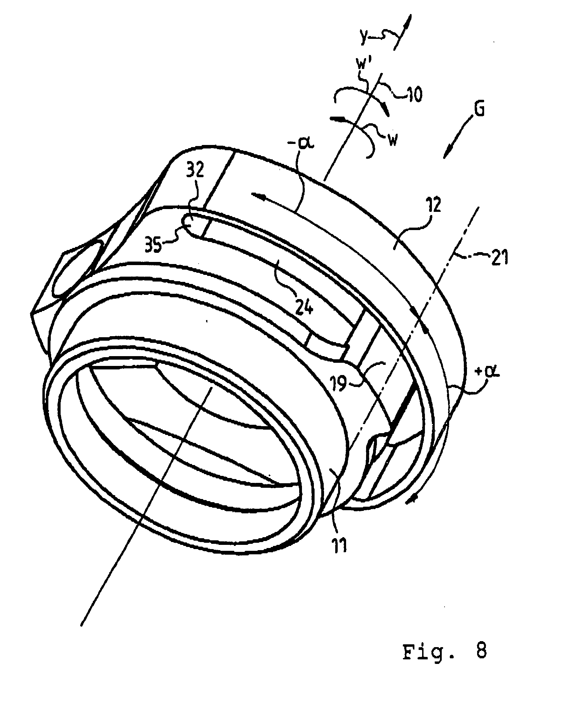

Die Figur 8 zeigt schließlich eine perspektivische Ansicht des Zusammenwirkens der in den Figuren 1, 2 bis 4 gezeigten oberen Lagerschale 11 und der in den Figuren 1, 5 bis 7 gezeigten Klemmeinrichtung 12. Im montierten Zustand ist die Lagerschale 11 und damit auch der an der Lagerschale 11 angeordnete Nocken 19 drehfest mit dem nicht dargestellten Fahrradrahmen verbunden, wohingegen die Klemmeinrichtung 12 an dem nicht dargstellten Gabelschaftrohr fixiert ist und beim Lenken mit diesem um die Lenkachse 10 in Pfeilrichtung w oder w' um die Lenkachse 10 gedreht wird. Bei einer Drehung in die Drehrichtung w ist aus einer dargestellten Geradeausstellung G ein maximaler Lenkwinkel -α möglich und bei einer Drehung in die Drehung w' ist aus der dargestellten Geradeausstellung G ein maximaler Lenkwinkel +α möglich. Die Klemmeinrichtung 12 übergreift mit ihrer Nut 24 den Nocken 19 und kann sich über diesem beispielsweise in die Pfeilrichtung w' solange um die Lenkachse 10 hinwegdrehen bis der Nocken 19 an dem Ende 32 der Nut 24 an einer Seitenwand 35 der Nut 24 anliegt. Gemäß einer nicht dargestellten Ausführungsvariante ist es zur Dämpfung des Endanschlags vorgesehen, Dämpfungsmittel zu verwenden. Hierbei wird das Dämpfungsmittel entweder mit dem Nocken verbunden oder zweiteilig ausgeführt und im Bereich der Enden 32 der Nut 24 in diese eingelegt.

Gemäß einer nicht dargestellten Ausführungsvariante ist es auch vorgesehen eine Unterseite der Klemmeinrichtung vergleichbar mit einer Unterseite eines Steuersatzdeckels auszubilden und so die Verwendung eines Steuersatzdeckels überflüssig zu machen.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Fahrradkomplettrahmen
- 2: Fahrradrahmen
- 3: Gabel
- 4: Steuersatz
- 5: Lenkervorbau
- 6, 7: Distanzring
- 8: Gabelschaftrohr von 3
- 9: Steuerrohr von 2
- 10: Lenkachse
- 11: obere Lagerschale
- 12: Klemmeinrichtung
- 13: untere Lagerschale
- 14: unteres Lager
- 15: Steuersatzboden
- 16: oberes Lager
- 17: Steuersatzdeckel
- 18: Tretlager 1
- 19: Nocken
- 20: stiftförmige Nase
- 21: Längsachse von 19 bzw. 20
- 22: Klemmschelle
- 23: Unterseite von 12
- 24: Nut in 12
- 25: ringförmiger Ansatz von 11
- 26: Auflagering von 11
- 27: Aufnahmebereich für 16
- 28: Gewindebohrung in 12
- 29: Schraube
- 30: Durchgangsbohrung in 12
- 31: Kreisringsegment
- 32, 33: Ende von 24
- 34: Oberseite von 12
- 35: Seitenwand von 24

- A: Steuersatzkomponente, Fahrradrahmensteuersatzkomponente
- a19: Abstand zwischen 19 und 10
- +α, -α: Lenkwinkel nach in Drehrichtung w, w' aus G
- B: Steuersatzkomponente, Fahrradrahmensteuersatzkomponente
- C: Steuersatzkomponente, Fahrradrahmensteuersatzkomponente
- d30: Durchmesser von 30
- G: Geradeausstellung
- r17: Radius von 17
- w, w': Pfeilrichtung um 10
- y, y': Pfeilrichtung

## Patentansprüche

1. Steuersatzkomponenten (A, B) eines Steuersatzes (4) für einen Fahrradrahmen (2), insbesondere Fahrradrahmensteuersatzkomponenten (A, B) zur Begrenzung eines Lenkwinkels (+α, -α), umfassend eine obere Lagerschale (11) und eine Klemmeinrichtung (12), wobei die obere Lagerschale (11) bei jedem Lenkwinkel (+α, -α)fixiert zu einer Lenkachse (10) steht und wobei die Klemmeinrichtung (12) abhängig vom jeweiligen Lenkwinkel (+α, -α) gegenüber der oberen Lagerschale (11) um die Lenkachse (10) verdreht wird, **dadurch gekennzeichnet, dass** die obere Lagerschale (11) mit mindestens einem Nocken (19) direkt in eine Nut (24) der Klemmeinrichtung (12) greift, wobei die obere Lagerschale (11) mit dem wenigstens einen Nocken (19) an einem Steuersatzdeckel (17) vorbei in die wenigstens eine Nut (24) greift und wobei der Steuersatzdeckel (17), welcher eine weitere Steuersatzkomponente (C) bildet, bei fertig montiertem Steuersatz (4) formschlussfrei zwischen der oberen Lagerschale (11) und der Klemmeinrichtung (12) liegt.

2. Steuersatzkomponenten nach Anspruch 1, **dadurch gekennzeichnet, dass** die Nut (24) nach unten zu der oberen Lagerschale (11) geöffnet ist.

3. Steuersatzkomponenten nach Anspruch 1, **dadurch gekennzeichnet, dass** die Klemmeinrichtung (12) an ihrer Unterseite (23) als Steuersatzdeckel ausgebildet ist und bei fertig montiertem Steuersatz (4) die obere Lagerschale (11) wie ein Steuersatzdeckel abdeckt.

4. Steuersatzkomponenten nach einem der vorhergehenden Ansprüche, **dadurch gekennzeichnet, dass** die Klemmeinrichtung (12) eine Klemmschelle (22) umfasst, welche eine Abdeckung für die obere Lagerschale (11) bildet, wobei der Nocken (19) von oben in Richtung der Lenkachse (10) betrachtet durch die Klemmeinrichtung (12) verdeckt ist und wobei der Nocken (19) radial zu der Lenkachse (10) betrachtet durch die Klemmeinrichtung (12) verdeckt ist.

5. Steuersatzkomponenten nach einem der vorhergehenden Ansprüche, **dadurch gekennzeichnet, dass** der Nocken (19) als nach oben gerichtete stiftförmige Nase (20) ausgebildet ist und mit seiner Längsachse (21) parallel zu der Lenkachse (10) ausgerichtet ist.

6. Steuersatzkomponenten nach einem der vorhergehenden Ansprüche, **dadurch gekennzeichnet, dass** die Nut (24) der Klemmeinrichtung (12) als kreisringförmig gebogene und zu beiden Enden (32, 33) geschlossene Nut (24) ausgebildet ist, welche konzentrisch zu der Lenkachse (10) als Kreisringabschnitt verläuft und welche zu der oberen Lagerschale (11) derart geöffnet ist, dass der Nocken (19) der oberen Lagerschale (11) in die Nut (24) der Klemmeinrichtung (11) eingreift, wenn die obere Lagerschale (11) und die Klemmeinrichtung (12) montiert sind.

7. Steuersatzkomponenten nach einem der vorhergehenden Ansprüche, **dadurch gekennzeichnet, dass** der wenigstens eine Nocken (19) der oberen Lagerschale (11) unter Zwischenschaltung eines Dämpfungsmittels, welches insbesondere durch wenigstens einen elastischen Körper gebildet ist, in einer linken Lenkendstellung oder in einer rechten Lenkendstellung an einer Seitenwand der Nut (24) der Klemmeinrichtung (12) anliegt, wobei das Dämpfungsmittel an dem Nocken (19) befestigt ist und/oder wobei das Dämpfungsmittel in der wenigstens einen Nut (24) der Klemmeinrichtung (12) angeordnet ist und durch zwei elastische Körper gebildet ist, wobei die Körper in der Nut (24) im Bereich von deren geschlossenen Enden (32, 33) positioniert sind.

8. Steuersatzkomponenten nach einem der vorhergehenden Ansprüche, **dadurch gekennzeichnet, dass** die Klemmschelle (22) der Klemmeinrichtung (12) als geschlitzte Hülse ausgebildet ist, deren Durchmesser (d30) durch Anziehen wenigstens eines Klemmmittels reduziert wird, wobei das Klemmmittel insbesondere als Schraube (29) ausgebildet ist und insbesondere in eine an der Klemmschelle (22) ausgebildete Gewindebohrung (28) greift.

9. Steuersatzkomponenten nach einem der vorhergehenden Ansprüche, **dadurch gekennzeichnet, dass** zwischen der oberen Lagerschale (11) und der Klemmeinrichtung (12) ein Lager (16), ein Zentrierring und ein Steuersatzdeckel (17) angeordnet ist, wobei der Steuersatzdeckel (17) insbesondere gegenüber der Klemmeinrichtung (12) und insbesondere gegenüber der oberen Lagerschale (11) frei verdrehbar ist und wobei der Nocken (19) zu der Lenkachse (10) insbesondere einen radialen Abstand (a19) aufweist, welcher größer ist als ein Radius (r17) des Steuersatzdeckels (17).

10. Fahrradkomplettrahmen (1) umfassend einen Fahrradrahmen (2), eine Gabel (3) und einen Steuersatz (4) mit Steuersatzkomponenten (A, B) nach wenigstens einem der Ansprüche 1 bis 9, wobei die Gabel (3) ein Gabelschaftrohr (8) umfasst und wobei die Gabel (3) mit ihrem Gabelschaftrohr (8) unter Verwendung des Steuersatzes (4) in einem Steuerrohr (9) des Fahrradrahmens (2) drehbar um eine Lenkachse (10) gelagert ist, wobei der Steuersatz (4) neben weiteren Bauteilen eine obere Lagerschale (11) und eine Klemmeinrichtung (12) umfasst, wobei die obere Lagerschale (11) in ein lenkerseitiges Ende des Steuerrohrs (9) eingepresst ist und wobei die Klemmeinrichtung (12) drehfest mit dem Gabelschaftrohr (8) verbunden ist und der oberen Lagerschale (11) gegenüber liegt, wobei die obere Lagerschale (11) bei jedem Lenkwinkel (+α, -α) der Gabel (3) fixiert zu der Lenkachse (10) steht, wobei die Klemmeinrichtung (12) abhängig vom jeweiligen Lenkwinkel (+α, -α) der Gabel (3) gegenüber der oberen Lagerschale (11) um die Lenkachse (10) verdreht wird, **dadurch gekennzeichnet, dass** die obere Lagerschale (11) mit mindestens einem Nocken (19) direkt in eine Nut (24) der Klemmeinrichtung (12) greift, wobei die Nut (24) nach unten zu der oberen Lagerschale (11) geöffnet ist und wobei der Steuersatzdeckel (17), welcher eine weitere Steuersatzkomponente (C) bildet, bei fertig montiertem Steuersatz (4) formschlussfrei zwischen der oberen Lagerschale (11) und der Klemmeinrichtung (12) liegt.

## Claims

1. Headset components (A, B) of a headset (4) for a bicycle frame (2), in particular, bicycle frame headset components (A, B) for the limitation of a steering angle (+α, -α), comprising an upper bearing shell (11) and a clamping device (12), wherein the upper bearing shell (11) at each steering angle (+α, -α) is fixed to a steering axis (10) and wherein the clamping device (12), depending on the respective steering angle (+α, -α) with respect to the upper bearing shell (11), is rotated about the steering axis (10), **characterized in that** the upper bearing shell (11) engages with at least one cam (19) directly into a groove (24) of the clamping device (12), wherein the upper bearing shell (11) engages with at least one cam (19) past a headset cap (17) into the at least one groove (24) and wherein the headset cap (17), which forms a further headset component (C), lies in the fully assembled headset (4) in a form-fit free manner between the upper bearing shell (11) and the clamping device (12).

2. Headset components according to claim 1, **characterized in that** the groove (24) is downwardly opened towards the upper bearing shell (11).

3. Headset components according to claim 1, **characterized in that** the clamping device (12) is configured on its lower side (23) as a headset cap and in the fully assembled headset (4) covers the upper bearing shell (11) as a headset cap.

4. Headset components according to one of the preceding claims, **characterized in that** the clamping device (12) comprises a retaining clamp (22), which forms a cap for the upper bearing shell (11), wherein the cam (19) viewed from above in the direction of the steering axis (10) is covered by the clamping device (12) and wherein the cam (19) viewed radially to the steering axis (10) is covered by the clamping device (12).

5. Headset components according to one of the preceding claims, **characterized in that** the cam (19) is configured as an upwardly directed pin-shaped projection (20) and is aligned with its longitudinal axis (21) parallel to the steering axis (10).

6. Headset components according to one of the preceding claims, **characterized in that** the groove (24) of the clamping device (12) is configured as a circular ringshaped groove bent and closed at both ends (32, 33), which runs concentrically to the steering axis (10) as a circular ring section and which is opened at the upper bearing shell (11) such that the cam (19) of the upper bearing shell (11) engages in the groove (24) of the clamping device (11), when the upper bearing shell (11) and the clamping device (12) are mounted.

7. Headset components according to one of the preceding claims, **characterized in that** the at least one cam (19) of the upper bearing shell (11) through the interposition of a damping means, which if formed in particular by at least one elastic body, is in contact in a left steering position or in a right steering position with a side wall of the groove (24) of the clamping device (12), wherein the damping means is mounted on the cam (19) and/or wherein the clamping means is arranged in the at least one groove (24) of the clamping device (12) and is formed by two elastic bodies, wherein the bodies are positioned in the groove (24) in the area of its closed ends (32, 33).

8. Headset components according to one of the preceding claims, **characterized in that** the retaining clamp (22) of the clamping device (12) is configured as a slotted sleeve, the diameter (d30) of which is reduced by tightening at least one clamping means, wherein the clamping means is configured in particular as a screw (29) and engages in particular in a threaded bore hole (28) formed on the retaining clamp (22).

9. Headset components according to one of the preceding claims, **characterized in that** between the upper bearing shell (11) and the clamping device (12) a bearing (16), a centering ring and a headset cap (17) is arranged, wherein the headset cap (17) is freely rotatable particularly with respect to the clamping device (12) and particularly with respect to the upper bearing shell (11) and wherein the cam (19) has in particular a radial distance (a19) to the steering axis (10), which is greater than a radius (r17) of the headset cap (17).

10. Bicycle complete frame (1) comprising a bicycle frame (2), a fork (3) and a headset (4) with headset components (A, B) according to at least one of claims 1 to 9, wherein the fork (3) comprises a steerer tube (8) and wherein the fork (3) with a steerer tube (8) is pivot-mounted about a steering axis (10) using the headset (4) in a head tube (9) of the bicycle frame (2), wherein the headset (4) in addition to other components comprises an upper bearing shell (11) and a clamping device (12), wherein the upper bearing shell (11) is pressed into an end of the head tube (9) on the handlebar side and wherein the clamping device (12) is connected torque proof with the steerer tube (8) and lies opposite the upper bearing shell (11), wherein the upper bearing shell (11) at each steering angle (+α, -α) of the fork (3) is fixed to the steering axis (10), wherein the clamping device (12), depending on the respective steering angle (+α, -α) of the fork (3) with respect to the upper bearing shell (11), is rotated about the steering axis (10), **characterized in that** the upper bearing shell (11) engages with at least one cam (19) directly into a groove (24) of the clamping device (12), wherein the groove (24) is downwardly opened towards the upper bearing shell (11) and wherein the headset cap (17), which forms a further headset component (C) lies in the fully assembled headset (4) in a form-fit free manner between the upper bearing shell (11) and the clamping device (12).

## Revendications

1. Composants de jeu de direction (A, B) d'un jeu de direction (4) pour un cadre de vélo (2), plus particulièrement
des composants de jeu de direction de cadre de vélo (A, B) pour la limitation d'un angle de direction (+α, -α), comprenant un coussinet de palier supérieur (11) et un dispositif de blocage (12), le coussinet de palier supérieur (11) étant, pour chaque angle de direction (+α, -α), fixe par rapport à un axe de direction (10) et le dispositif de blocage (12) étant tourné autour de l'axe de direction par rapport au coussinet de palier supérieur (11) en fonction de l'angle de direction (+α, -α), **caractérisés en ce que** le coussinet de palier (11) s'emboîte, avec au moins une came (19), directement dans une rainure (24) du dispositif de blocage (12), le coussinet de palier supérieur (11) s'emboîtant, avec l'au moins une came (19), en passant devant un couvercle de jeu de direction (17), dans l'au moins une rainure (24) et le couvercle de jeu de direction (17), qui constitue un autre composant du jeu de direction (C), se trouve, lorsque le jeu de direction (4) est monté, sans engagement positif entre le coussinet de palier supérieur (11) et le dispositif de blocage (12).

2. Composants de jeu de direction selon la revendication 1, **caractérisés en ce que** la rainure (24) est ouverte vers le bas vers le coussinet de palier supérieur (11).

3. Composants de jeu de direction selon la revendication 1, **caractérisés en ce que** le dispositif de blocage (12) est conçu, sur son côté inférieur (23), comme un couvercle de jeu de direction et, lorsque le jeu de direction (4) est monté, recouvre le coussinet de palier supérieur (11) comme un couvercle de jeu de direction.

4. Composants de jeu de direction selon l'une des revendications précédentes, **caractérisés en ce que** le dispositif de blocage (12) comprend un collier de blocage (22) qui constitue une protection pour le coussinet de palier supérieur (11), la came (19), vue de dessus en direction de l'axe de direction (10), étant recouverte par le dispositif de blocage (12) et la came (19), en vue radiale en direction de l'axe de direction (10), étant recouverte par le dispositif de blocage (12).

5. Composants de jeu de direction selon l'une des revendications précédentes, **caractérisés en ce que** la came (19) est conçue comme un embout (20) en forme de tige, dirigé vers le haut et est orienté, avec son axe longitudinal (21), parallèlement à l'axe de direction (10).

6. Composants de jeu de direction selon l'une des revendications précédentes, **caractérisés en ce que** la rainure (24) du dispositif de blocage (12) est conçue comme une rainure (24) incurvée en forme de couronne circulaire et fermée aux deux extrémités (32, 33), qui est concentrique à l'axe de direction (10), en tant que portion de couronne circulaire et qui est ouverte vers le coussinet de palier supérieur (11) de telle sorte que la came (24) s'emboîte avec le dispositif de blocage (11) lorsque le coussinet de palier supérieur (11) et le dispositif de blocage (12) sont montés.

7. Composants de jeu de direction selon l'une des revendications précédentes, **caractérisés en ce que** l'au moins une came (19) du coussinet de palier supérieur (11) s'appuie, grâce au branchement d'un moyen d'amortissement, constitué plus particulièrement d'au moins un élément élastique, dans une position finale de direction gauche ou dans une position finale de direction droite, contre une paroi latérale de la rainure (24) du dispositif de blocage (12), le moyen d'amortissement étant fixé à la came (19) et/ou le moyen d'amortissement étant disposé dans l'au moins une rainure (24) du dispositif de blocage (12) et étant constitué de deux éléments élastiques, les éléments étant positionnés dans la rainure (24) au niveau de ses extrémités fermées (32, 33).

8. Composants de jeu de direction selon l'une des revendications précédentes, **caractérisés en ce que** le collier de blocage (22) du dispositif de blocage (12) est conçu comme un manchon fendu dont le diamètre (d30) est réduit par le serrage d'au moins un moyen de blocage, le moyen de blocage étant plus particulièrement conçu comme une vis (29) et plus particulièrement s'emboîte dans un alésage taraudé (28) réalisé dans le collier de blocage (22).

9. Composants de jeu de direction selon l'une des revendications précédentes, **caractérisés en ce que**, entre le coussinet de palier supérieur (11) et le dispositif de blocage (12), se trouvent un palier (16), une bague de centrage et un couvercle de jeu de direction (17), le couvercle de jeu de direction (17) étant plus particulièrement rotatif librement par rapport au dispositif de blocage (12) et plus particulièrement par rapport au coussinet de palier supérieur (11) et la came (19) présentant plus particulièrement, par rapport à l'axe de direction(10), une distance radiale (a19), qui est supérieure à un rayon (r17) du couvercle du jeu direction (17).

10. Cadre de vélo complet (1) comprenant un cadre de vélo (2), une fourche (3) et un jeu de direction (4) avec des composants de jeu de direction (A, B) selon au moins l'une des revendications 1 à 9, la fourche (3) comprenant un tube de fourche (8) et la fourche (3) étant logée, avec son tube de fourche (8), à l'aide du jeu de direction (4) dans un tube de direction (9) du cadre de vélo (2), de manière rotative autour d'un axe de direction (10), le jeu de direction (4) comprenant, en plus d'autres composants, un coussinet de palier supérieur (11) et un dispositif de blocage (12), le coussinet de palier supérieur (11) étant pressé dans une extrémité côté guidon du tube de direction (9) et le dispositif de blocage (12) étant relié de manière solidaire en rotation avec le tube de fourche (8) et se trouve en face du coussinet de palier supérieur (11), le coussinet de palier supérieur (11) étant, pour chaque angle de direction (+α, -α) de la fourche (3), fixe par rapport à l'axe de direction (10), le dispositif de blocage (12) étant tourné autour de l'axe de direction (10) par rapport au coussinet de palier supérieur (11) en fonction de l'angle de direction (+α, -α) de la fourche (3), **caractérisé en ce que** le coussinet de palier supérieur (11) s'emboîte directement, avec une came (19), dans une rainure (24) du dispositif de blocage (12), la rainure (24) étant ouverte vers le bas en direction du coussinet de palier supérieur (11) et le couvercle du jeu de direction (17), qui constitué un composant de jeu de direction (C) supplémentaire, se trouve, lorsque le jeu de direction (4) est monté, sans engagement positif, entre le coussinet de palier supérieur (11) et le dispositif de blocage (12).
